# FASCICULE DE BREVET EUROPEEN

(11) **EP 4 538 514 B1**
(45) Date de publication et mention de la délivrance du brevet: **12.08.2026**
(21) Numéro de dépôt: 24204611.8
(22) Date de dépôt: 04.10.2024
(51) Int. Cl.: F02C 3/22, F02C 6/20, F02C 7/224

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 12.10.2023 FR 2310977
(43) Date de publication de la demande: 16.04.2025
(73) Titulaire: Airbus (S.A.S.), 31700 Blagnac (FR); AIRBUS OPERATIONS (S.A.S.), 31060 Toulouse (FR)
(72) Inventeur: CZAPLA, Lionel, TOULOUSE (FR); CARRETERO BENIGNOS, Jorge, OTTOBRUNN (DE); DEVASIGAMANI, Nandakumar, TOULOUSE (FR)
(74) Mandataire: Airbus-OPS SAS

(56) Documents cités:
- EP-A1- 4 124 738
- CN-A- 116 591 859
- FR-A1- 3 127 989
- US-A1- 2013 305 686

## Description

### DOMAINE TECHNIQUE

La présente invention concerne un ensemble propulsif pour un aéronef, ledit ensemble propulsif comprenant un système de propulsion comportant une tuyère d'éjection assurant l'éjection des gaz de combustion du système de propulsion et un système d'échange thermique arrangé au niveau de la tuyère d'éjection pour assurer un transfert de calories vers le dihydrogène du système de propulsion, ainsi qu'un aéronef comportant au moins un tel système de propulsion.

### ÉTAT DE LA TECHNIQUE ANTÉRIEURE

Afin de se déplacer, un aéronef comporte classiquement au moins un ensemble propulsif comprenant un système de propulsion arrangé dans une nacelle et qui peut prendre la forme d'un turboréacteur ou d'un turbopropulseur. Dans chaque cas, le système de propulsion comporte un ensemble rotatif qui entraîne une soufflante ou une hélice. L'ensemble rotatif constitue un noyau du système de propulsion et il comporte de l'avant vers l'arrière une entrée d'air qui permet l'introduction d'air dans une veine du noyau, un compresseur qui comprime l'air ainsi introduit, une chambre de combustion dans laquelle se mélange l'air ainsi comprimé et un carburant, et une turbine qui permet la détente des gaz de combustion et qui génère la rotation qui est transmise à la soufflante ou à l'hélice.

En aval de la turbine, une tuyère d'éjection assure l'éjection des gaz de combustion.

Il est également connu, notamment dans le cas du dihydrogène, que le rendement de la combustion d'un carburant est amélioré si ce carburant est chauffé avant ladite combustion. Il est également connu d'utiliser une partie des gaz de combustion chauds évacués par la tuyère d'éjection pour réchauffer le carburant.

Le document US 2013/305686 A1 et le document CN 116 591 859 A divulguent des ensembles propulsifs selon l'art antérieur.

### EXPOSÉ DE L'INVENTION

Un objet de la présente invention est de proposer une autre solution pour réchauffer le dihydrogène avant sa combustion.

À cet effet, est proposé un ensemble propulsif pour un aéronef comportant :
- un système de propulsion comprenant un carénage, un ensemble rotatif comportant une chambre de combustion et logé dans le carénage, une tuyère d'éjection disposée en aval de la chambre de combustion et délimitée par une portion arrière du carénage, dite paroi de tuyère, et assurant l'éjection des gaz de combustion issus de la combustion du dihydrogène dans la chambre de combustion,
- un réservoir de dihydrogène,
- une canalisation d'apport qui relie le réservoir et la chambre de combustion, et
- au moins une aube disposée à l'intérieur de la tuyère d'éjection où la canalisation d'apport présente une portion de canalisation arrangée dans ladite aube.

La canalisation d'apport est une canalisation à double peau avec une peau intérieure délimitant un volume intérieur dans laquelle circule le dihydrogène et une peau extérieure délimitant un volume extérieur.

Avec un tel arrangement, les calories des gaz de combustion sont transférées au dihydrogène.

Selon un mode de réalisation particulier, le volume extérieur contient un fluide.

Avantageusement, l'ensemble propulsif comporte une pompe qui est fluidiquement connectée au volume extérieur et qui est arrangée pour mettre en mouvement le fluide dans le volume extérieur.

Selon un mode de réalisation particulier, le volume extérieur est mis au vide. Avantageusement, ladite au moins une aube est équipée d'ailettes.

Avantageusement, l'ensemble propulsif comporte un anneau extérieur solidaire de la paroi de tuyère, un anneau intérieur disposé à l'intérieur de l'anneau extérieur et ladite au moins une aube est fixée entre l'anneau extérieur et l'anneau intérieur.

Avantageusement, ladite au moins une aube est creuse et délimite une chambre dans laquelle est disposée au moins une partie de la portion de canalisation, et la paroi de l'aube est percée d'au moins un orifice amont arrangé pour permettre l'introduction des gaz chauds de combustion dans la chambre et d'au moins un orifice aval arrangé pour permettre l'extraction des gaz chauds de combustion de la chambre.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un ensemble propulsif selon l'invention,
La figure 2 est une représentation schématique vue de côté et en coupe d'un ensemble propulsif selon un mode de réalisation de l'invention,
La figure 3 est une vue en perspective d'un mode de réalisation particulier de l'invention,
La figure 4 est une vue de face de la figure 3,
La figure 5 est une coupe selon la ligne V-V de la figure 4, et
La figure 6 est une représentation schématique similaire à celle de la figure 2 pour un autre mode de réalisation de l'invention.

### EXPOSÉ DÉTAILLÉ DE MODES DE RÉALISATION

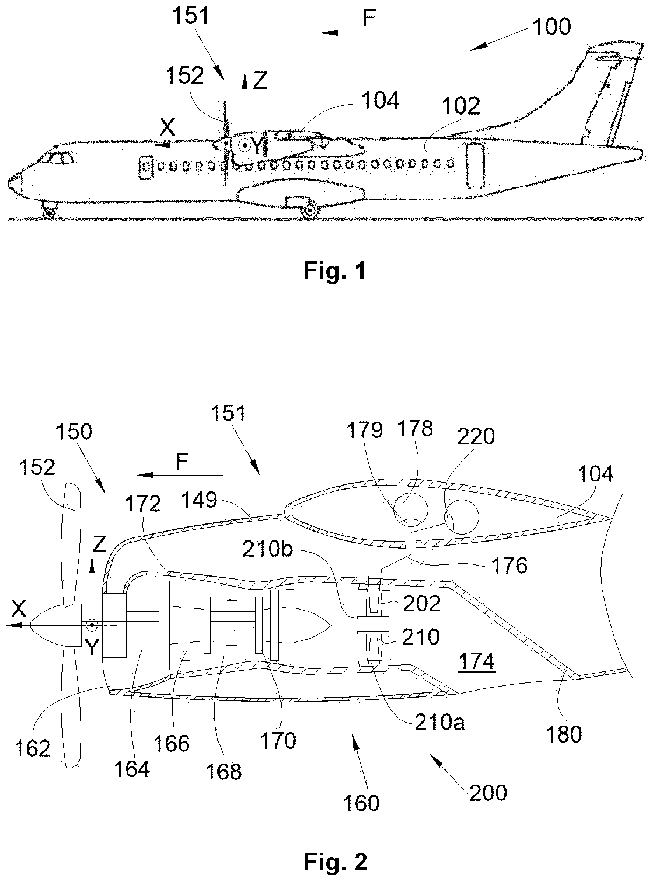

Dans la description qui suit, les termes relatifs à une position sont pris en référence à un aéronef en position d'avancement, c'est-à-dire comme il est représenté sur la figure 1 où la flèche F montre la direction d'avancement de l'aéronef.

La figure 1 montre un aéronef 100 qui présente un fuselage 102 de part et d'autre duquel est fixée une aile 104. Sous chaque aile 104 est fixé au moins un ensemble propulsif 151.

La figure 2 montre l'ensemble propulsif 151 qui comprend une nacelle 149 et un système de propulsion 150 entouré par la nacelle 149. Dans le mode de réalisation de l'invention présenté ici, le système de propulsion 150 prend la forme d'un turbopropulseur avec une hélice 152 entraînée en rotation par un ensemble rotatif monté à l'intérieur d'un carénage 172 du système de propulsion 150 logé à l'intérieur de la nacelle 149, mais le système de propulsion 150 peut également prendre la forme d'un turboréacteur entraînant une soufflante. Ainsi, d'une manière générale, le système de propulsion 150 comporte un ensemble rotatif et un élément mobile 152 (hélice ou soufflante).

Dans la description qui suit, et par convention, on appelle X, l'axe longitudinal qui correspond à l'axe de rotation de l'élément mobile 152 orienté positivement dans le sens d'avancement de l'aéronef 100, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

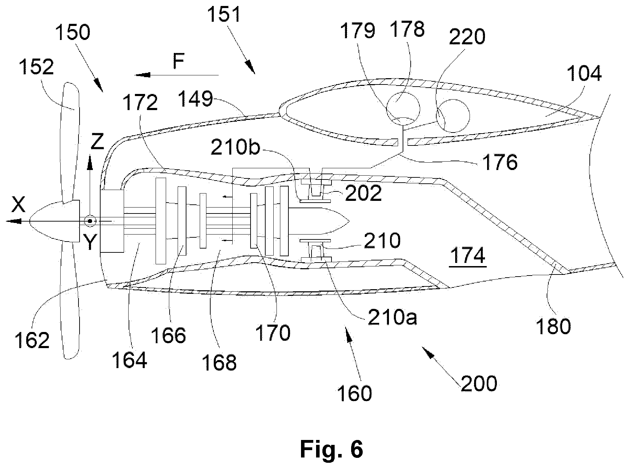

La figure 2 et la figure 6 montrent le système de propulsion 150 dans le cas d'un turbopropulseur. Un ensemble rotatif 160 constitue un noyau du système de propulsion 150 et comporte de l'avant vers l'arrière, une entrée d'air 162 qui permet l'introduction d'air dans une veine 164 du noyau, un compresseur 166 qui comprime l'air ainsi introduit, une chambre de combustion 168 dans laquelle l'air ainsi comprimé et du dihydrogène se mélangent et brûlent, et une turbine 170 qui permet la détente des gaz de combustion et qui génère la rotation qui est transmise à l'élément mobile, ici l'hélice 152. Les éléments de l'ensemble rotatif 160 sont entourés par le carénage 172 formé de carters structuraux montés autour des éléments de l'ensemble rotatif 160 et permettent de le rigidifier afin notamment de limiter ses distorsions en fonctionnement.

Le carénage 172 est, d'une part, ouvert à l'avant au niveau de l'entrée d'air 162 et délimite la veine 164 et est, d'autre part, ouvert à l'arrière au niveau d'une tuyère d'éjection 174 qui est en aval de la turbine 170 et donc de la chambre de combustion 168 et assure l'éjection des gaz de combustion issus de la combustion du dihydrogène et de l'air dans la chambre de combustion 168. La portion arrière du carénage 172 qui entoure la tuyère d'éjection 174 forme la paroi de tuyère 180.

L'espace entre la nacelle 149 et le carénage 172 est occupé par divers systèmes permettant d'assurer le fonctionnement du système de propulsion 150. En particulier, afin d'alimenter la chambre de combustion 168 en dihydrogène, l'ensemble propulsif 151 comporte un réservoir de dihydrogène 178 qui est ici logé dans l'aile 104, une canalisation d'apport 176 qui relie le réservoir 178 et la chambre de combustion 168 et une pompe 179 qui met en mouvement le dihydrogène du réservoir 178 jusqu'à la chambre de combustion 168 à travers la canalisation d'apport 176. Sans sortir du cadre de l'invention, le réservoir de dihydrogène 178 peut aussi être logé dans une autre partie de l'aéronef 100, par exemple dans le fuselage 102.

Afin de réchauffer le dihydrogène avant son injection dans la chambre de combustion 168, et ce pour obtenir une meilleure combustion, l'ensemble propulsif 151 comporte également un système d'échangeur thermique 200 qui est arrangé, lorsque le système de propulsion 150 est en fonctionnement, pour assurer un échange de calories entre les gaz chauds de combustion circulant dans la tuyère d'éjection 174 et le dihydrogène plus froid circulant dans la canalisation d'apport 176.

D'une manière générale, le système d'échangeur thermique 200 est arrangé à l'intérieur de la tuyère d'éjection 174.

Dans le mode de réalisation de la figure 2, le système d'échangeur thermique 200 est arrangé dans la tuyère d'éjection 174 à l'arrière de la turbine 170.

Dans le mode de réalisation de la figure 6, le système d'échangeur thermique 200 est arrangé dans la tuyère d'éjection 174 au niveau de la turbine 170 et autour de cette dernière.

L'ensemble propulsif 151 comporte également au moins une aube 210 disposée à l'intérieur de la tuyère d'éjection 174, selon le cas autour de la turbine 170 ou à l'arrière de celle-ci, pour être plongée dans les gaz chauds de combustion et la canalisation d'apport 176 présente une portion de canalisation 202 qui est arrangée dans ladite aube 210 afin d'assurer un transfert des calories des gaz chauds de combustion vers le dihydrogène circulant dans la portion de canalisation 202 avant d'arriver à la chambre de combustion 168.

Le système d'échangeur thermique 200 comporte ainsi la portion de canalisation 202 de la canalisation d'apport 176 et l'échange de calories s'effectue au niveau de cette portion de canalisation 202.

En provenant du réservoir de dihydrogène 178, la canalisation d'apport 176 traverse ici la paroi de tuyère 180 pour devenir la portion de canalisation 202 qui circule dans l'aube 210. La canalisation d'apport 176 retraverse alors la paroi de tuyère 180 avant de replonger vers la chambre de combustion 168 en traversant le carénage 172.

La ou chaque aube 210 est fixée à l'intérieur de la paroi de tuyère 180 par tous moyens de fixation appropriés tels que des écrous, des points de soudure, etc. et dont un mode de réalisation est décrit ci-dessous.

Selon un mode de réalisation particulier, pour des raisons de sécurité, il est prévu que la canalisation d'apport 176, et en particulier la portion de canalisation 202, est une canalisation à double peau avec une peau intérieure délimitant un volume intérieur dans laquelle circule le dihydrogène et une peau extérieure qui est autour de la peau intérieure et où est délimité entre la peau intérieure et la peau extérieure un volume extérieur ne contenant pas de dihydrogène en condition normale de fonctionnement, c'est-à-dire sans fuite.

Ainsi, même en cas de fuite au niveau de la peau intérieure, le dihydrogène va se répandre dans le volume extérieur en restant isolé.

Le volume extérieur peut être mis au vide ou il peut être rempli d'un fluide neutre au regard du dihydrogène, comme le diazote par exemple.

En cas de fuite au niveau de la peau extérieure, le fluide neutre va se répandre hors du volume extérieur ou le volume extérieur va se remplir de gaz chauds de combustion.

Pour prévenir une fuite de dihydrogène au niveau de la portion de canalisation 202, le système d'échangeur thermique 200 peut comporter des moyens de détection de fuite et une unité de contrôle connectée aux moyens de détection de fuite. Le système d'échangeur thermique 200 comporte également une vanne montée sur la canalisation d'apport 176 en amont de la portion de canalisation 202 par rapport au sens d'écoulement du dihydrogène et commandée en ouverture et en fermeture par l'unité de contrôle. L'unité de contrôle commande la fermeture de la vanne lorsque les moyens de détection de fuite détectent une fuite.

Les moyens de détection de fuite sont par exemple des capteurs de pression disposés dans le volume extérieur. Une fuite de la peau intérieure ou de la peau extérieure sera détectée par les capteurs de pression du fait d'un changement de la pression dans le volume extérieur : par exemple, une fuite de la peau intérieure sera détectée si la pression dans le volume extérieur est sensiblement égale à la pression de dihydrogène dans le volume intérieur et une fuite de la peau extérieure sera détectée si la pression dans le volume extérieur est sensiblement égale à la pression de l'atmosphère extérieure à la portion de canalisation 202.

Lorsque le volume extérieur est mis au vide, le volume extérieur est par exemple fluidiquement connecté à une pompe à vide.

Lorsque le volume extérieur est rempli d'un fluide, ce dernier peut être statique ou en mouvement. Lorsqu'il est statique, le fluide n'est pas en mouvement à l'intérieur du volume extérieur et dans ce cas, le volume extérieur est préférentiellement fluidiquement connecté à un vase d'expansion qui permet d'adapter la pression à la température du fluide.

Selon un autre mode de réalisation, le système d'échangeur thermique 200 comporte une pompe 220 qui est fluidiquement connectée au volume extérieur et qui est arrangée pour mettre en mouvement le fluide dans le volume extérieur.

La portion de canalisation 202 peut être constituée de plusieurs canaux, chacun étant à double peau, et les canaux sont alimentés par un double collecteur, où un premier collecteur alimente les différents volumes extérieurs avec du fluide et où un deuxième collecteur alimente les différents volumes intérieurs avec du dihydrogène.

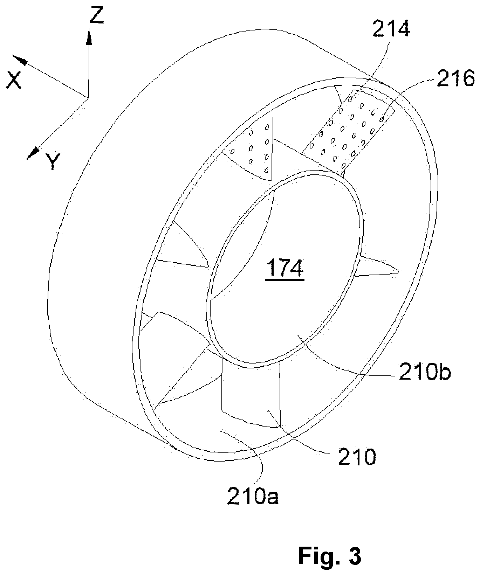

Les Figs. 3 à 5 montrent un mode d'implémentation particulier des aubes 210.

La ou chaque aube 210 s'étend ici radialement autour de l'axe longitudinal X en travers de la tuyère d'éjection 174.

Pour des raisons aérodynamiques, la ou chaque aube 210 est relativement plate et présente un profil aérodynamique présentant au niveau de l'avant de l'aube 210, un bord d'attaque et au niveau de l'arrière de l'aube 210, un bord de fuite.

Pour avoir un meilleur échange thermique entre les gaz chauds de combustion et le dihydrogène, la ou chaque aube 210 est équipée d'ailettes 302 qui sont réalisées dans un matériau à forte conductivité thermique et solidaire de l'aube 210. Les ailettes 302 sont plongées dans les gaz chauds de combustion.

Dans le mode de réalisation de l'invention présenté ici, l'ensemble propulsif 151 comporte un anneau extérieur 210a solidaire de la paroi de tuyère 180 et un anneau intérieur 210b disposé de manière concentrique à l'intérieur de l'anneau extérieur 210a qui présente donc un diamètre supérieur à celui de l'anneau intérieur 210b.

La ou chaque aube 210 est fixée radialement entre l'anneau extérieur 210a et l'anneau intérieur 210b.

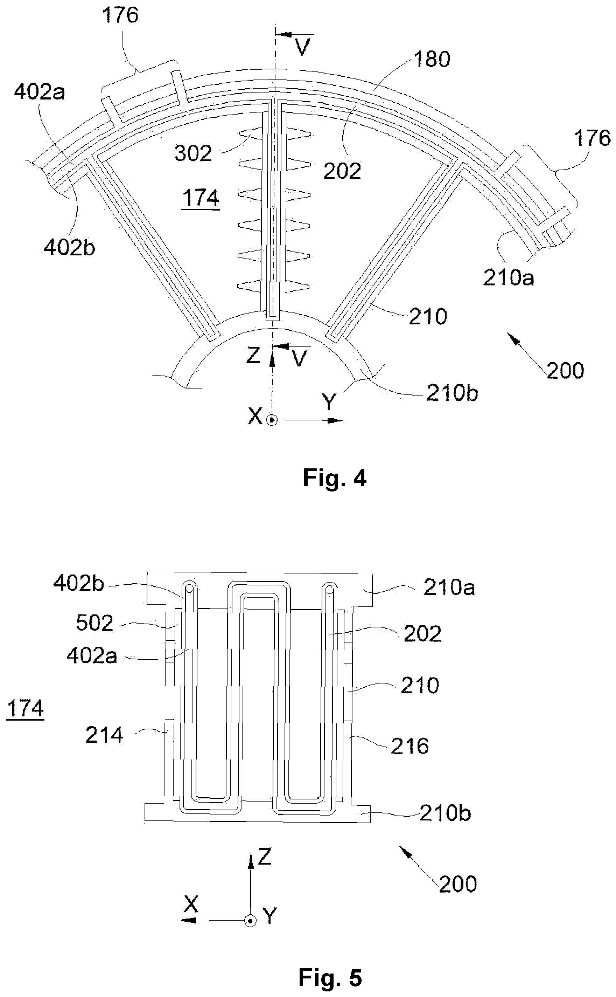

La fixation de l'anneau extérieur 210a à la paroi de tuyère 180 est assurée par tous moyens de fixation appropriés tels que des boulons, des points de soudure, etc. De la même manière, la ou chaque aube 210 est fixée à l'anneau extérieur 210a par tous moyens de fixation appropriés et l'anneau intérieur 210b est fixé à la ou chaque aube 210 par tous moyens de fixation appropriés. Comme le montre la figure 4, dans le cas d'une portion de canalisation 202 à double peau, il y a une conduite intérieure 402a pour le dihydrogène et autour, il y a une conduite extérieure 402b. Ces conduites 402a-b sont alimentées depuis la canalisation d'apport 176 provenant du réservoir 178 en amont du carénage 172 et alimente la canalisation d'apport 176 qui va vers la chambre de combustion 168 en aval du carénage 172. Les conduites 402a-b circulent dans l'anneau extérieur 210a, l'anneau intérieur 210b et dans au moins une aube 210.

Selon un mode de réalisation particulier, qui est montré à la figure 5, chaque conduite 402a-b circule également le long de l'axe longitudinal X entre une partie avant 504a de l'aube 210 et une partie arrière 504b de l'aube 210.

Dans ce mode de réalisation, la ou chaque aube 210 est creuse et délimite une chambre 502 dans laquelle est disposée au moins une partie de la portion de canalisation 202.

La paroi de l'aube 210, en particulier de la partie avant 504a, est percée d'au moins un orifice amont 214 arrangé pour permettre l'introduction des gaz chauds de combustion dans la chambre 502. De la même manière, la paroi de l'aube 210, en particulier de la partie arrière 504b, est percée d'au moins un orifice aval 216 arrangé pour permettre l'extraction des gaz chauds de combustion de la chambre 502. Les orifices 214 et 216 débouchent ainsi dans la chambre 502. Les diamètres des orifices 214 et 216 sont préférentiellement compris entre 2 mm et 10 mm pour assurer la circulation des gaz chauds de combustion dans la chambre 502.

Ainsi, les gaz chauds de combustion pénètrent dans la chambre 502 pour entourer la portion de canalisation 202 et améliorer le transfert de calories vers le dihydrogène.

Bien sûr, il est possible d'avoir d'autres orifices répartis sur l'aube 210.

## Revendications

1. Ensemble propulsif (151) pour un aéronef (100) comportant :
- un système de propulsion (150) comprenant un carénage (172), un ensemble rotatif (160) comportant une chambre de combustion (168) et logé dans le carénage (172), une tuyère d'éjection (174) disposée en aval de la chambre de combustion (168) et délimitée par une portion arrière du carénage (172), dite paroi de tuyère (180), et assurant l'éjection des gaz de combustion issus de la combustion du dihydrogène dans la chambre de combustion (168),
- un réservoir de dihydrogène (178),
- une canalisation d'apport (176) qui relie le réservoir (178) et la chambre de combustion (168), et
- au moins une aube (210) disposée à l'intérieur de la tuyère d'éjection (174) où la canalisation d'apport (176) présente une portion de canalisation (202) arrangée dans ladite aube (210), **caractérisé en ce que** la canalisation d'apport (176) est une canalisation à double peau avec une peau intérieure délimitant un volume intérieur dans laquelle circule le dihydrogène et une peau extérieure délimitant un volume extérieur.

2. Ensemble propulsif (151) selon la revendication 1, **caractérisé en ce que** le volume extérieur contient un fluide.

3. Ensemble propulsif (151) selon la revendication 2, **caractérisé en ce qu'**il comporte une pompe (220) qui est fluidiquement connectée au volume extérieur et qui est arrangée pour mettre en mouvement le fluide dans le volume extérieur.

4. Ensemble propulsif (151) selon la revendication 3, **caractérisé en ce que** le volume extérieur est mis au vide.

5. Ensemble propulsif (151) selon l'une des revendications 1 à 4, **caractérisé en ce que** ladite au moins une aube (210) est équipée d'ailettes (302).

6. Ensemble propulsif (151) selon l'une des revendications 1 à 5, **caractérisé en ce qu'**il comporte un anneau extérieur (210a) solidaire de la paroi de tuyère (180), un anneau intérieur (210b) disposé à l'intérieur de l'anneau extérieur (210a) et **en ce que** ladite au moins une aube (210) est fixée entre l'anneau extérieur (210a) et l'anneau intérieur (210b).

7. Ensemble propulsif (151) selon l'une des revendications 1 à 6, **caractérisé en ce que** ladite au moins une aube (210) est creuse et délimite une chambre (502) dans laquelle est disposée au moins une partie de la portion de canalisation (202), et **en ce que** la paroi de l'aube (210) est percée d'au moins un orifice amont (214) arrangé pour permettre l'introduction des gaz chauds de combustion dans la chambre (502) et d'au moins un orifice aval (216) arrangé pour permettre l'extraction des gaz chauds de combustion de la chambre (502).

8. Aéronef (100) comportant au moins un ensemble propulsif (151) selon l'une des revendications précédentes.

## Patentansprüche

1. Antriebseinheit (151) für ein Luftfahrzeug (100), umfassend:
- ein Antriebssystem (150), aufweisend eine Verkleidung (172), eine rotierende Einheit (160), die eine Brennkammer (168) umfasst und in der Verkleidung (172) aufgenommen ist, eine Ausstoßdüse (174), die stromab der Brennkammer (168) angeordnet ist und durch einen hinteren Abschnitt der Verkleidung (172), Düsenwand (180) genannt, begrenzt wird und das Ausstoßen der aus der Verbrennung des Wasserstoffs in der Brennkammer (168) hervorgegangenen Verbrennungsgase gewährleistet,
- einen Wasserstofftank (178),
- eine Zufuhrleitung (176), die den Tank (178) und die Brennkammer (168) verbindet, und
- mindestens eine Schaufel (210), die im Inneren der Ausstoßdüse (174) angeordnet ist, wobei die Zufuhrleitung (176) einen Leitungsabschnitt (202) aufweist, der in der Schaufel (210) eingerichtet ist, **dadurch gekennzeichnet, dass** die Zufuhrleitung (176) eine doppelhäutige Leitung ist mit einer Innenhaut, die ein Innenvolumen begrenzt, in dem der Wasserstoff zirkuliert, und einer Außenhaut, die ein Außenvolumen begrenzt.

2. Antriebseinheit (151) nach Anspruch 1, **dadurch gekennzeichnet, dass** das Außenvolumen ein Fluid enthält.

3. Antriebseinheit (151) nach Anspruch 2, **dadurch gekennzeichnet, dass** sie eine Pumpe (220) umfasst, die fluidisch an das Außenvolumen angeschlossen ist und die dazu eingerichtet ist, das Fluid in dem Außenvolumen in Bewegung zu versetzen.

4. Antriebseinheit (151) nach Anspruch 3, **dadurch gekennzeichnet, dass** das Außenvolumen evakuiert ist.

5. Antriebseinheit (151) nach einem der Ansprüche 1 bis 4, **dadurch gekennzeichnet, dass** die mindestens eine Schaufel (210) mit Rippen (302) ausgestattet ist.

6. Antriebseinheit (151) nach einem der Ansprüche 1 bis 5, **dadurch gekennzeichnet, dass** sie einen mit der Düsenwand (180) fest verbundenen Außenring (210a), einen im Inneren des Außenrings (210a) angeordneten Innenring (210b) umfasst und dass die mindestens eine Schaufel (210) zwischen dem Außenring (210a) und dem Innenring (210b) fixiert ist.

7. Antriebseinheit (151) nach einem der Ansprüche 1 bis 6, **dadurch gekennzeichnet, dass** die mindestens eine Schaufel (210) hohl ist und eine Kammer (502) begrenzt, in der mindestens ein Teil des Leitungsabschnitts (202) angeordnet ist, und dass die Wand der Schaufel (210) mit mindestens einer stromaufwärtigen Öffnung (214) durchbohrt ist, die dazu eingerichtet ist, das Einleiten der heißen Verbrennungsgase in die Kammer (502) zu ermöglichen, und mit mindestens einer stromabwärtigen Öffnung (216), die dazu eingerichtet ist, das Abziehen der heißen Verbrennungsgase aus der Kammer (502) zu ermöglichen.

8. Luftfahrzeug (100), das mindestens eine Antriebseinheit (151) nach einem der vorhergehenden Ansprüche umfasst.

## Claims

1. Propulsion assembly (151) for an aircraft (100), comprising:
- a propulsion system (150) comprising a fairing (172), a rotary assembly (160) comprising a combustion chamber (168) and housed in the fairing (172), an exhaust nozzle (174) positioned downstream of the combustion chamber (168) and delimited by a rear portion of the fairing (172), referred to as nozzle wall (180), and configured to discharge the combustion gases produced by the combustion of the dihydrogen in the combustion chamber (168),
- a dihydrogen tank (178),
- a supply duct (176) which connects the tank (178) and the combustion chamber (168), and
- at least one vane (210) arranged inside the exhaust nozzle (174), wherein the supply duct (176) has a duct portion (202) arranged in said vane (210), **characterised in that** the supply duct (176) is a double-walled duct with an inner wall delimiting an inner volume in which the dihydrogen flows and an outer wall delimiting an outer volume.

2. Propulsion assembly (151) according to Claim 1, **characterized in that** the outer volume contains a fluid.

3. Propulsion assembly (151) according to Claim 2, **characterized in that** it comprises a pump (220) which is fluidically connected to the outer volume and is arranged to set the fluid in the outer volume in motion.

4. Propulsion assembly (151) according to Claim 3, **characterized in that** the outer volume is under vacuum.

5. Propulsion assembly (151) according to one of Claims 1 to 4, **characterized in that** said at least one vane (210) is equipped with fins (302).

6. Propulsion assembly (151) according to one of Claims 1 to 5, **characterized in that** it comprises an outer ring (210a) secured to the nozzle wall (180) and an inner ring (210b) positioned inside the outer ring (210a), and **in that** said at least one vane (210) is fixed between the outer ring (210a) and the inner ring (210b).

7. Propulsion assembly (151) according to one of Claims 1 to 6, **characterized in that** said at least one vane (210) is hollow and delimits a chamber (502) in which at least a part of the duct portion (202) is positioned, and **in that** at least one upstream orifice (214), arranged to allow the introduction of the hot combustion gases into the chamber (502), and at least one downstream orifice (216), arranged to allow the discharge of the hot combustion gases from the chamber (502), are formed in the wall of the vane (210).

8. Aircraft (100) having at least one propulsion assembly (151) according to one of the preceding claims.
